# EUROPEAN PATENT SPECIFICATION

(11) **EP 0 991 273 B1**
(45) Date of publication and mention of the grant of the patent: **08.08.2007**
(21) Application number: 99119346.7
(22) Date of filing: 28.09.1999
(51) Int. Cl.: H04N 5/77

(54) **Method for recording image and image pickup apparatus**
Verfahren zur Bildaufnahme und Bildaufnahmeanlage
Procédé d'enregistrement d'image et appareil d'enregistrement d'image

(30) Priority: 30.09.1998 JP 27910698
(43) Date of publication of application: 05.04.2000
(73) Proprietor: SANYO ELECTRIC CO., LTD., Moriguchi-shi, Osaka (JP)
(72) Inventor: Tunoda, Hirosi, Kadoma-shi, Osaka 571-0055 (JP)
(74) Representative: Glawe, Delfs, Moll

(56) References cited:
- EP-A- 0 868 092
- US-A- 5 525 957
- US-A- 5 642 458
- US-A- 5 805 945

## Description

### BACKGROUND OF THE INVENTION

The present invention relates to a method for storing image data of a plurality of images in a storage medium, then recording the image data being stored in the storage medium into a non-volatile recording medium. The present invention also relates to an image pickup apparatus used for embodying the method.

Along with rapid popularization of computer systems, particularly of personal computers (hereinafter called PC) in recent years, there is an increase in opportunities in which an image taken by an image pickup apparatus is handled as image data on a PC.

Until recently the image data was obtained commonly from a photograph taken on a silver film. Specifically, an image on the photograph was read by an image reading apparatus such as a flat bed scanner, a film scanner, and so on. In more recent years however, a digital still camera (hereinafter called digital camera) has become popular as an image pickup apparatus for its capability of creating the image data directly accessible by a PC.

Technological advancement in the digital camera has been very remarkable particularly in recent years. The digital camera now has capabilities of not only taking independent frames of image as a static image but also taking plural successive frames of image. These plural images thus obtained can then be displayed in a successive manner on a monitor screen as a motion picture. Another capability of the digital camera is sound recording function concomitantly with the motion picture. The sound is stored as sound data.

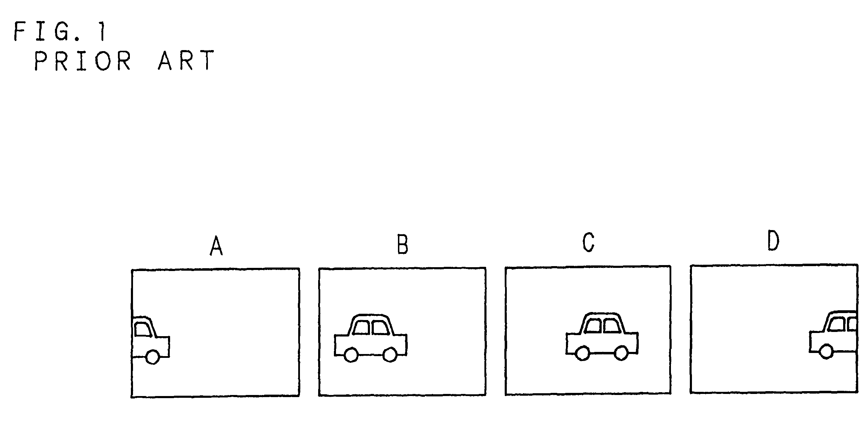

FIG. 1A through FIG. 1D are pictorial representation of a motion picture comprising a plurality of successive images.

As shown in FIG. 1A through FIG. 1D, a plurality of images successively taken of a moving automobile can be displayed as a motion picture of the automobile moving on a screen from one side to the other, by successively displaying the images each showing the automobile in a different location of the screen.

According to the above digital camera, the successive plurality of image data obtained pickup operation is compressed as motion picture data, which are then further compressed together with sound data by using such a compression method as Motion JPEG (Motion Joint Photographic Coding Experts Group) into compressed motion picture data, which are then recorded in a non-volatile recording medium. The recording medium popularly used for this purpose is a removable flash memory.

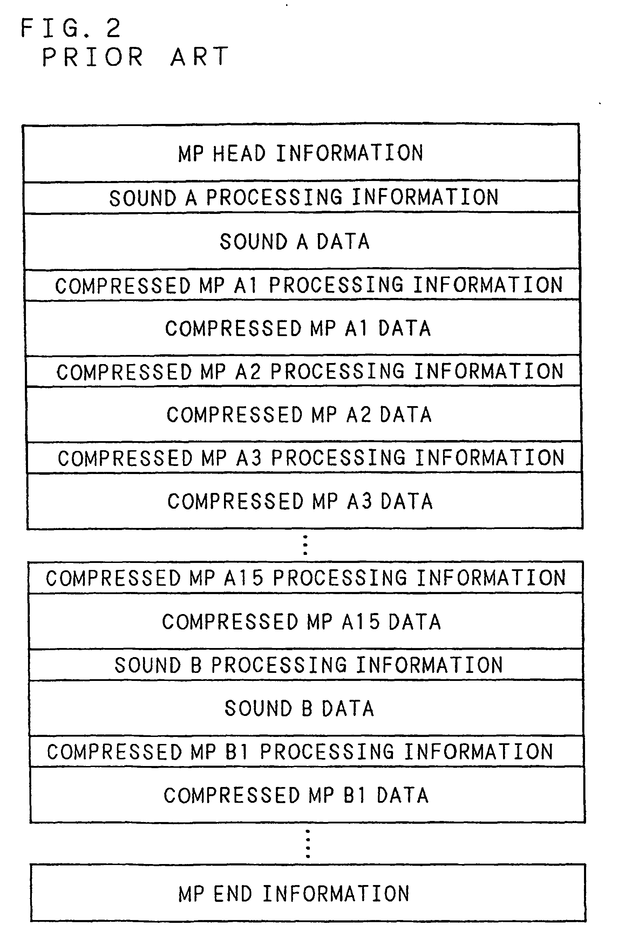

FIG. 2 is a conceptual diagram showing an example of recording form of the compressed motion picture data recorded in the Motion JPEG form.

In this example, images pickup at an interval of 1/15 of a second are handled as a motion picture (hereinafter called MP). Specifically, a group of 15 frames of image, i.e. a fragment of the MP for one second including sound, are used as the unit of processing.

The compressed MP data includes MP head information which indicates the beginning of the MP data, sound processing information which indicates sound sampling cycle and so on, MP processing information which indicates sound data, image pickup interval and so on, compressed MP data which is the compressed image data of one frame of image, and MP end information which indicates an end of the MP data.

The compressed MP data recorded in the recording medium of the digital camera is then transferred to the PC for recording in a hard disc of the PC, or the data may be reproduced and displayed on a liquid crystal screen of the digital camera.

The flash memory widely used as the recording medium for the digital camera has a problematic characteristic of varying bit rate. Specifically, aging of memory elements as well as other deterioration decreases the bit rate, i.e. recording speed, after a long period of use. In order to avoid problems the image data is temporarily stored in a storage medium having a warranted bit rate such as a video RAM, so that the image data is moved later from the temporary storage medium to the recording medium after an image pickup operation is finished.

However, when a plurality of images such as those in a MP are handled, the size of the compressed MP data stored in the storage medium is very large, requiring a long time for transferring the data from the storage medium to the recording medium. This poses an inconvenience that the image cannot be displayed for review on the liquid crystal monitor upon completion of the image pickup operation. Another inconvenience is that the recording medium cannot be removed for replacement right after the completion of the image pickup operation.

These problems become more obvious when the image pickup operation is continued for a long time and thus the size of the compressed MP data becomes very large.

Document US-A-5 642 458 describes a method where picked-up image data are firstly stored in an intermediate buffer memory, then recorded into a non-volatile recording medium. Both processes are performed alternated in the time.

### BRIEF SUMMARY OF THE INVENTION

The present invention has been made in order to solve the problems described above. It is therefore an object of this invention to provide a method for recording image that shortens a period of time from completion of an image pickup operation to the time of play back, and to the time when the recording medium becomes ready for removal. Another object of the present invention is to provide an image pickup apparatus used for embodying the above method.

A method for recording image according to the present invention comprises steps of: storing image data obtained by an image pickup operation in a storage medium; recording the image data stored in the storage medium into a non-volatile recording medium; measuring the amount of the image data stored in the storage medium until reaching a predetermined amount of data; and after reaching the predetermined amount of data stored the storage medium, recording the image data being stored in the storage medium into a non-volatile recording medium, in parallel in the time with the step of storing in the storage medium image data obtained by the image pickup operation.

Further, a method for recording image according to the present invention is characterized by that the method further comprises the steps of: storing in the storage medium storage information including a start address and data length of the image data being stored in the storage medium; and recording the image data being stored in the storage medium to the recording medium based on the storage information.

Further, a method for recording image according to the present invention is characterized by that the method further comprises the steps of: converting an image signal obtained by the image pickup operation to the image data by the frame of image, and compressing the image data before recording in the storage medium.

Further, a method for recording image according to the present invention is characterized by that the compression of the image signals is performed in a motion picture compression form.

An image pickup apparatus according to the present invention comprises: an optical lens; an image pickup device for taking image through the optical lens; storage instructing means for storing image data obtained by an image pickup operation of the image pickup device in a storage medium; record instructing means for allowing to record the image data from the storage medium to a non-volatile recording medium; measuring means for measuring of the amount of image data stored in the storage medium; and parallel processing instructing means for instructing the record instructing means to record into a non-volatile recording medium the image data being stored in the storage medium in parallel in the time with the storing operation of image data obtained by the image pickup operation after reaching the predetermined amount of data stored in the storage medium.

Further, an image pickup apparatus according to the present invention is characterized by that the storage instructing means stores in the storage medium storage information including a start address and data length of the image data stored in the storage medium; and the record instructing means allows to record the image data stored in the storage medium into the recording medium based on the storage information.

Further, an image pickup apparatus according to the present invention further comprises: A/D conversion means for converting an image signal obtained by the image pickup device from analog image signals to digital image signals; image data conversion means for converting the converted digital image signals to image data; and compressing means for compressing the converted image data, wherein the compressed image data are stored in the storage medium.

Further, an image pickup apparatus according to the present invention is characterized by that the compressing means compresses the image data according to a motion picture compression form.

Thus, by performing the operation for reading out image data based on the instruction list and recording of the image data to the recording medium and in parallel with the successive operations from image pickup to storing in the storage medium, it becomes possible to shorten the period of time from completion of the image pickup operation to the time of play back, and to the time when the recording medium becomes ready for removal.

The above and further objects and features of the invention will more fully be apparent from the following detailed description with accompanying drawings.

### BRIEF DESCRIPTION OF THE DRAWINGS

FIG. 1A through FIG. 1D are illustrations describing a motion picture comprising successive images;
FIG. 2 is a conceptual diagram showing an example of a recording form of compressed MP data recorded on a storage medium;
FIG. 3A and FIG. 3B are sketch drawings showing a digital still camera according to the present invention;
FIG. 4 is a block diagram showing a circuitry structure of the digital still camera according to the present invention;
FIG. 5A through FIG. 5E are image processing timing charts showing the timing of image processing performed by the digital still camera according to the present invention;
FIG. 6 is a conceptual diagram showing a recording form of information stored in a storage medium of the digital still camera according to the present invention;
FIG. 7 is a conceptual diagram showing a recording form of an instruction list stored in the storage medium of the digital still camera according to the present invention;
FIG. 8 is a conceptual diagram showing a recording form of information recorded in a recording medium of the digital still camera according to the present invention;
FIG. 9A and FIG. 9B are flowcharts showing a method for recording image according to the present invention;
FIG. 10 is a flowchart showing a method for recording image according to the present invention;
FIG. 11 is a flowchart showing the method for recording image according to the present invention;
FIG. 12 is a flowchart showing the method for recording image according to the present invention;
FIG. 13 is a flowchart showing the method for recording image according to the present invention; and
FIG. 14 is a flowchart showing the method for recording image according to the present invention.

### DETAILED DESCRIPTION OF THE INVENTION

Now, the present invention will be described in detail with reference to the attached drawings of an embodiment.

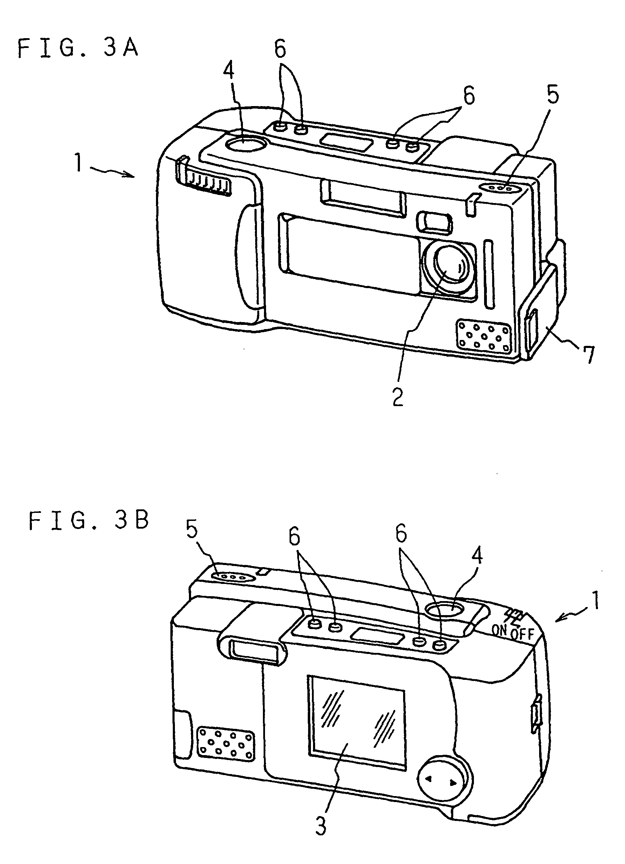

FIG. 3A and FIG. 3B are sketch drawings of a digital still camera (hereinafter called digital camera) according to the present invention. FIG. 3A is a view from a front, while FIG. 3B shows a view from a rear.

A member indicated by numeric code 1 in the views is a housing for protecting inside. The housing 1 has a front face provided with an objective lens 2, and a rear face provided with a liquid crystal monitor 3 for displaying an image taken by the objective lens 2.

The housing 1 has an upper face provided with a push-type shutter button 4. When the shutter button 4 is depressed, the objective lens 2 takes an image, which is then temporarily stored, and then recorded the image stored.

The upper face of the housing 1 is also provided with a microphone 5 for receiving sound, as well as other select buttons 6 for selection between different modes such as a sound recording mode for recording sound, a continuous mode for obtaining a motion picture (hereinafter called MP) by taking successive images, and so on.

The housing 1 has a side face provided with a number of terminals 7 for connection with a personal computer (hereinafter called PC), with earphones, and with other external equipment. These terminals are protected by a terminal cover.

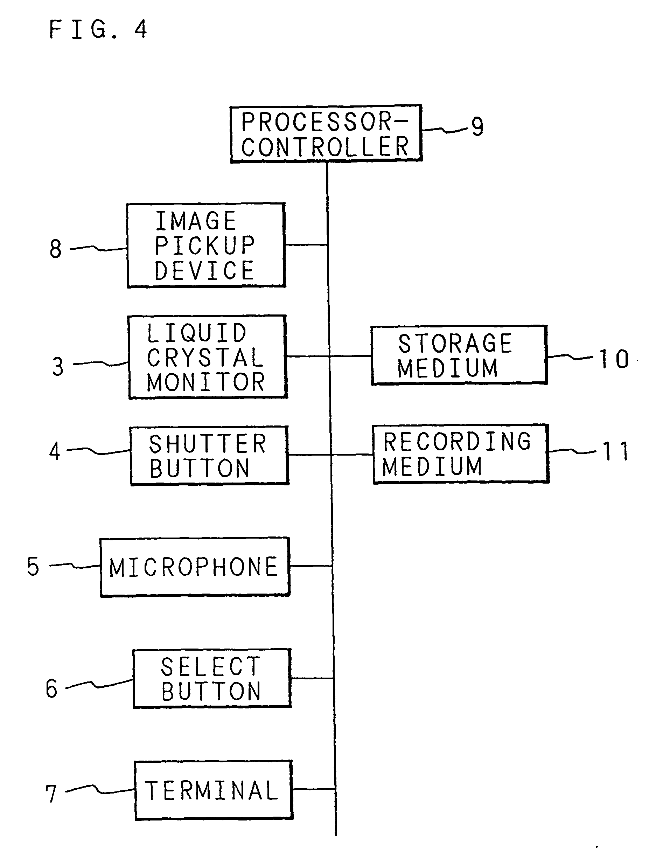

FIG. 4 is a block diagram showing a circuitry structure of the digital camera according to the present invention.

A member indicated by numerical code 8 in the figure is an image pickup device such as a CCD (Charge Coupled Device) for outputting the image taken by the objective lens 2 as analog image signals by the frame of image. The analog signals from the image pickup device 8 are then sent to a processor-controller 9, which controls an entire system of the digital camera.

The processor-controller 9 performs A/D conversion, in which the analog image signals received from the image pickup device 8 are converted to digital image signals. The digital image signals are then converted to image data of bitmap form for a frame of image, and then stored in a storage medium 10 such as a rapid semiconductor-memory.

The image data stored in the storage medium 10 is read out by the processor-controller 9, converted to video signals, and sent to the liquid crystal monitor 3. The liquid crystal monitor 3 displays the converted video signals as the frame of image.

Through the above steps, the image taken by the objective lens 2 is always displayed in the liquid crystal monitor 3, and updated at a predetermined interval.

A user reviews the image displayed in the liquid crystal monitor 3, and depresses the shutter button 4 at a desired timing, upon which an image-pickup command signal is entered to the processor-controller 9.

The processor-controller 9, upon reception of the image-pickup command signal, the image data of the frame of image stored in the storage medium 10 compresses the data to a size of 1/10 to 1/50 using a compression form such as JPEG (Joint Photographic Coding Experts Group) to create compressed image data for the given frame of image, and then stores the compressed image data, again in the storage medium 10.

The compressed image data stored in the storage medium 10 is read out by the processor-controller 9, and then recorded in a removable non-volatile recording medium 11 such as a flash memory. Thus, in the recording medium 11 the compressed image data for one frame of image are recorded.

Through the above cycle of steps the user can obtain the compressed image data representing the image displayed on the liquid crystal monitor 3 when the shutter button 4 is depressed.

Further, the compressed image data recorded in the recording medium 11 can be reverted into the image data, and transferred back to the storage medium 10 by the processor-controller 9. Then, the processor-controller 9 converts the stored image data in the storage medium 10 to video signals for display on the liquid crystal monitor 3.

The above method for obtaining the compressed image data for a frame of image can be applied to a method for obtaining compressed MP data from a motion picture composed of a plurality of frames of successive image taken at a predetermined image-taking interval when the digital camera is set to the continuous mode.

Specifically, while the shutter button 4 is being depressed, the analog image signals are sent from the image pickup device 8 to the processor-controller 9, which performs the A/D conversion to digital image signals, then performs the conversion to image data of bitmap form, and then stores the data in the storage medium 10.

The image data stored in the storage medium 10 is read out by the processor-controller 9, and compressed to a size of 1/10 to 1/50 using a MP compression form such as Motion JPEG, in which a bunch of image data of the plural frames is created for each of the compressed image data.

Then, in the processor-controller 9 compressed MP data of the plural frames, MP processing information which indicates image pickup interval and so on, MP head information which indicates a beginning of the MP data, and MP end information which indicates an end of the MP data are created, and stored again in the storage medium 10 under the specifying of an address of the storage region in the storage medium 10.

An instruction list where storage regions of the storage medium 10 correspond to storage information in addition to the compressed MP data, the MP processing information, the MP head information, and the MP end information. The storage information includes start addresses and the data length of the above pieces of data and information, and is stored in the information list.

The above steps of processing from the image pickup operation through the storing operation of the compressed data in the storage medium 10 are successively performed.

Then, the compressed MP data, the MP processing information, the MP head information, and the MP end information stored in the storage medium 10 based on the storage information stored in the instruction list are read out, and then recorded in the recording medium 11.

By the above operation, the user can obtain the compressed MP data representing the image displayed on the liquid crystal monitor 3 while the shutter button 4 is being depressed.

Further, the MP can be reproduced through the following steps. Specifically, the compressed MP data recorded in the recording medium 11 is reverted into the image data for the plural frames, and stored in the storage medium 10 together with the MP processing information and other relevant information by the processor-controller 9. Then, in the processor-controller 9 the stored image data are converted to video signals, which are displayed on the liquid crystal monitor 3 successively at the image-pickup interval specified in the MP processing information.

When the sound recording mode is selected, external sound is picked up as analog sound signals by the microphone 5 during the image-pickup operation. The analog sound signals are sent from the microphone 5 to the processor-controller 9. In the processor-controller 9 the analog sound signals are converted to digital sound signals, which are sampled at a predetermined sampling interval.

Based on the sampled digital sound signals, sound processing information which includes sound data to be replayed with the taken MP on sound-sampling, the sound sampling interval used, and other information are created, and stores the information under specifying an address for storing the information in the storage medium 10.

In addition, storage information including storage start addresses of the sound data and the sound processing information, and the lengths of respective data is stored in the instruction list stored in the storage medium.

The sound data and the sound processing information stored in the storage medium 10 is read out based on the storage information stored in the instruction list, and recorded in the recording medium 11.

The sound data stored in the recording medium 11 is converted by the processor-controller 9 to the analog sound signals, and then can be reproduced, based on the sound processing information, concomitantly with the MP for listening through the earphones connected to the terminal.

Description hereinafter will be made on the basis that the MP comprises images taken at an interval of 1/15 of a second, and that the compressed MP data for 15 frames of image, which represents that of 1 second, is coupled with concomitant sound data of 1 second as a group, or the unit of processing.

By grouping the compressed MP data for one second with the sound data for that second as the unit of data handling, synchronization between the MP and the sound can be adjusted every second during reproducing.

It should be noted here that the processor-controller 9 is capable of generating and transmitting a synchronizing signal to the image pickup device 8, storage medium 10, and recording medium 11 for necessary synchronizing actions.

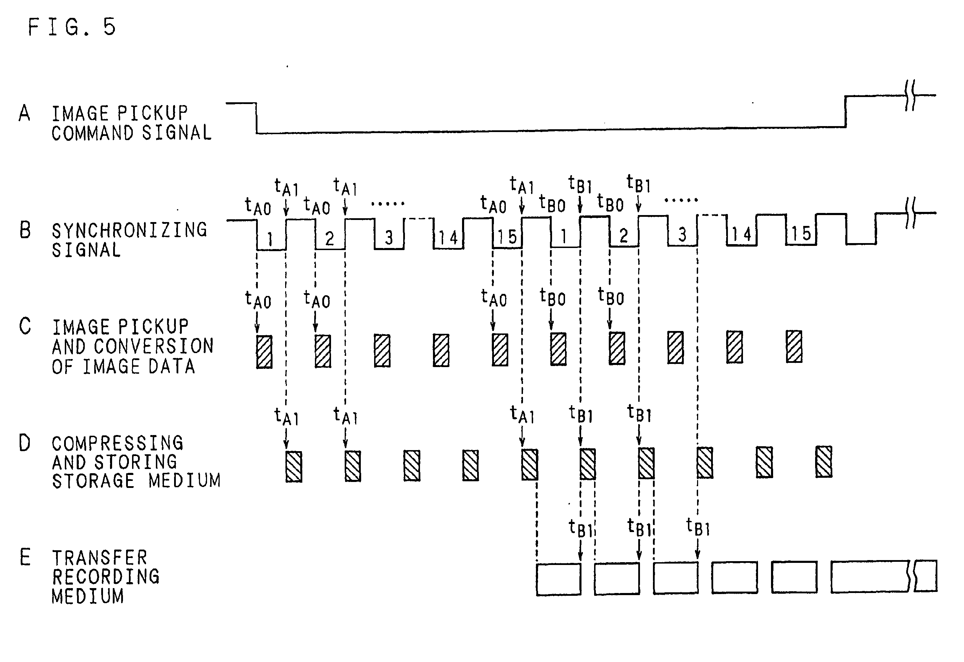

FIG. 5A through FIG. 5E are timing charts showing image processing timing in the digital camera according to the present invention. FIG. 5A shows the timing of the image pickup command signal. FIG. 5B shows the timing of the synchronizing signal, whereas FIG. 5C shows the timing of image pickup and image data processing operations, FIG. 5D shows the timing of compressing and storing operation in the storage medium, and FIG. 5E shows the timing of the recording operation in the recording medium.

In FIG. 5A through FIG. 5E, when the shutter button 4 is depressed to enter the image-pickup command signal, first 15 frames of image are taken and compressed, the obtained compressed MP data are stored in the storage medium 10. In this cycle of processing, each point when the synchronizing signal becomes "High" is referred to as tA1, whereas each point when the synchronizing signal becomes "Low" is referred to as tA0. Likewise, in a second cycle in which next 15 frames of image are taken and stored in the storage medium 10, each point when the synchronizing signal becomes "High" is referred to as tB1, whereas each point when the synchronizing signal becomes "Low" is referred to as tB0.

According to the present invention, tA0 is a point when the image pickup operation is performed and processing is advanced till the conversion to bitmap data is completed. Then, at point tA1, operations using the storage medium 10 such as storing in the storage medium 10, data compressing operation, setting of the instruction list, and storing compressed data in the storage medium 10 are performed.

Upon completion of storing the compressed MP data for the first 15 frames, the recording operation to record the compressed MP data and relevant information such as the MP processing information for these particular 15 frames is commenced. The recording operation in the recording medium 11 is continued even after tB0, while the next operations of image pickup and conversion to bitmap data are being performed.

However, the recording operation in the recording medium 11 is suspended at tB1, and the suspension continues until the operations using the storage medium 10 are finished.

As described above, each of the operations such as image data conversion, data compression, storing in the storage medium 10, is timed by the synchronizing signal.

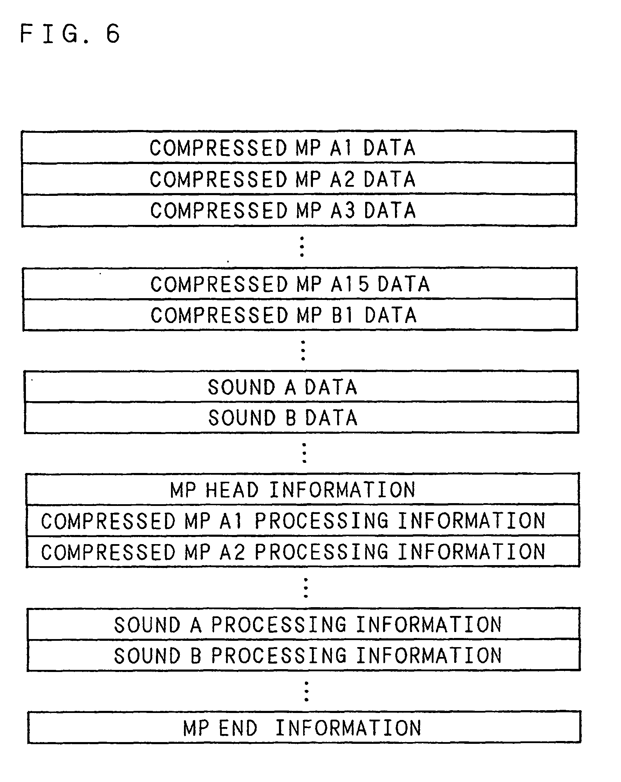

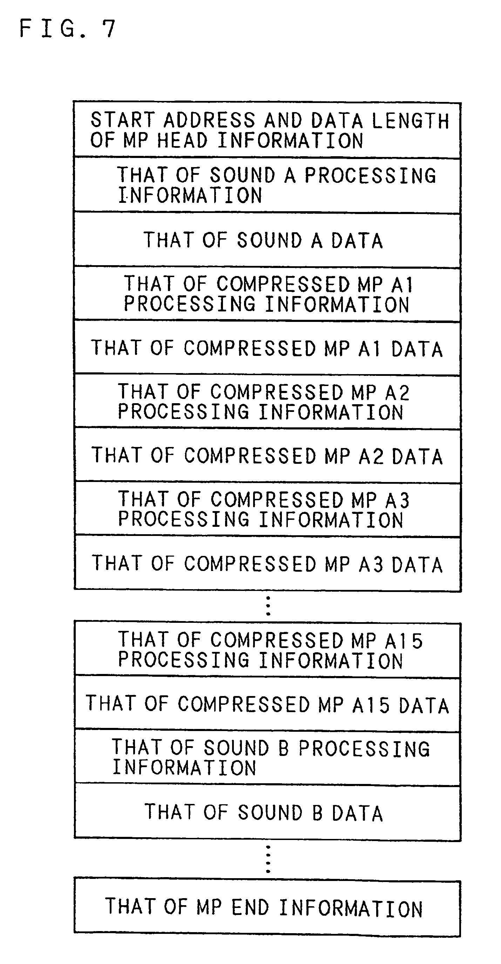

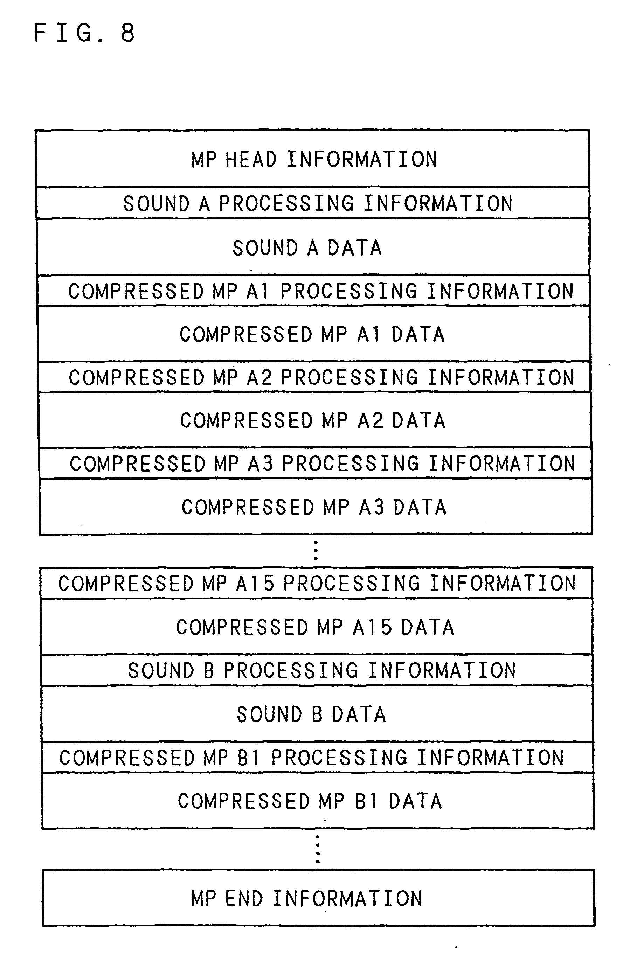

FIG. 6 is a conceptual diagram showing a recording form of information stored in a storage medium 10 of the digital camera according to the present invention. FIG. 7 is a conceptual diagram showing a recording form of the instruction list of the digital camera according to the present invention. FIG. 8 is a conceptual diagram showing a recording form of information such as compressed MP data recorded in the recording medium 11 of the digital camera according to the present invention.

A storing region of the storage medium 10 stores the following data and information in the following order: Compressed MP A1 data which is the compressed form of the first image data of the first group of 15 frames; compressed MP A2 data which is the compressed form of the second image data of the first group of 15 frames; ...; compressed MP A15 data; compressed MP B1 data which is the compressed form of the first image data of the second group of 15 frames; ...;sound A data which is the sound for the first group; sound B data which is the sound for the second group; .. ; the MP head information; the compressed MP A1 processing information; compressed MP A2 processing information; ...; sound A processing information; sound B processing information; ...;and the MP end information.

Further, the instruction list set in the storage medium 10 stores the following storage information in the following order: Start address and the data length of the MP head information; start address and the data length of the sound A processing information; start address and the data length of the sound A data; start address and the data length of the compressed MP A1 processing information; start address and the data length of the compressed MP A1 data; start address and the data length of the compressed MP A2 processing information; start address and the data length of the compressed MP A2 data; ...; start address and the data length of the compressed MP A15 processing information; start address and the data length of the compressed MP A15 data; start address and the data length of the sound B processing information; and start address and the data length of the compressed MP end information.

The recording medium 11 stores the following storage information in the following order: The MP head information; sound A processing information; sound A data; compressed MP A1 processing information, compressed MP A1 data, compressed MP A2 processing information; compressed MP A2 data; ...; compressed MP A15 processing information, compressed MP A15 data; sound B processing information; sound B data; ....; and the MP end information.

It should be noted here that the information is stored in the storage medium 10 and recorded in the recording medium 11 in different order. This is because the information recorded in the recording medium 11 must follow an established recording format for the PC and other external devices to be able to use the information. On the other hand, when storage information in the storage medium, no such consideration may be taken but the information is stored in the best format for internal processing.

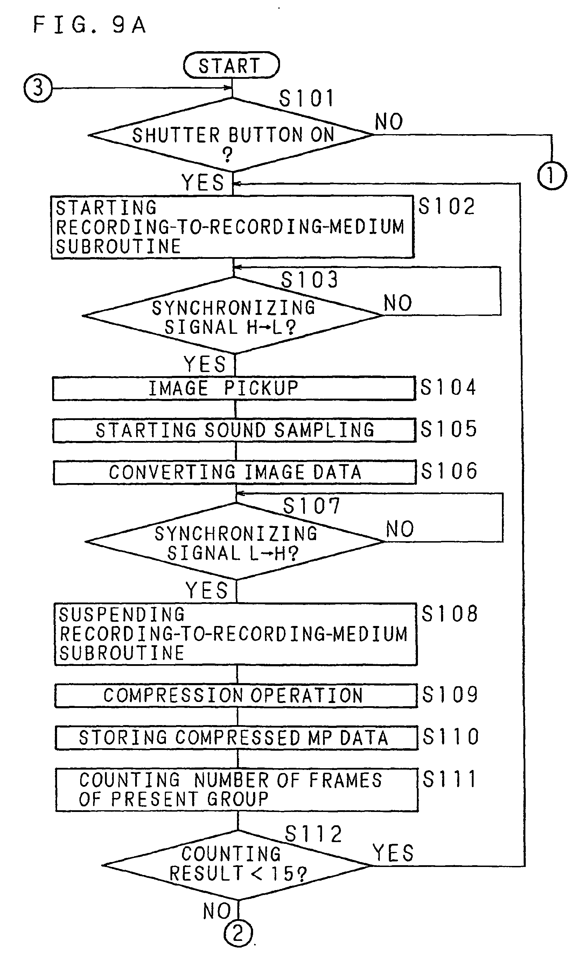

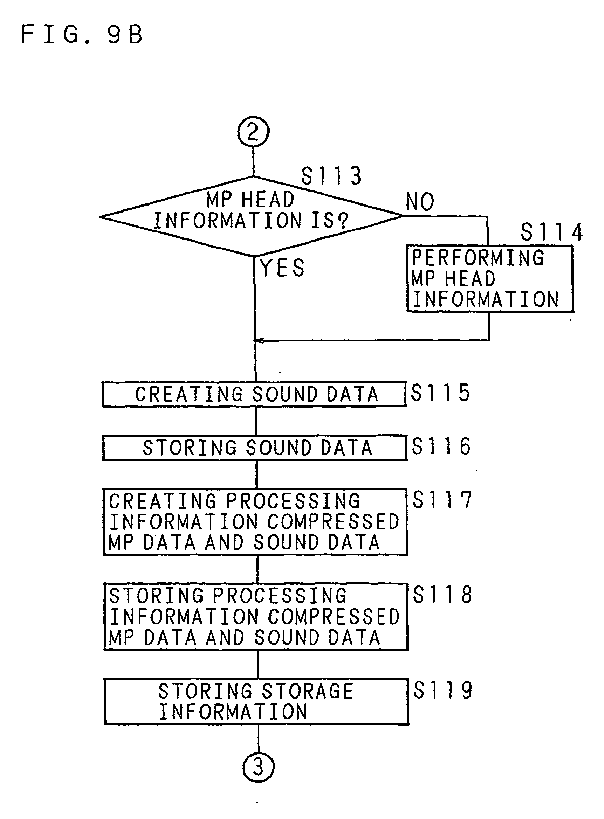

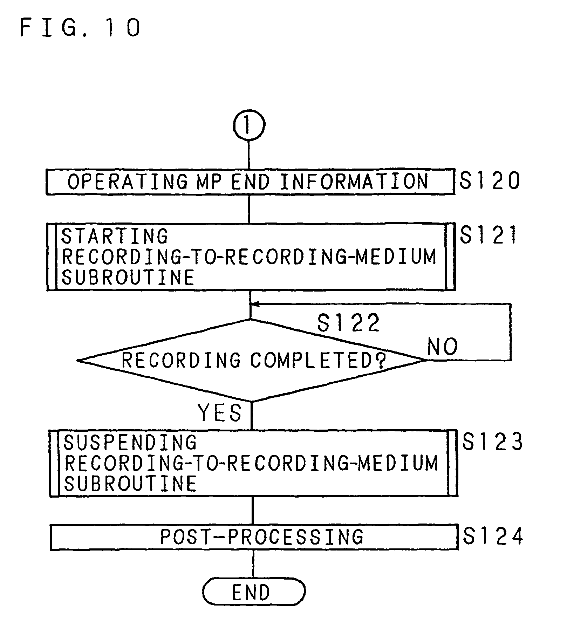

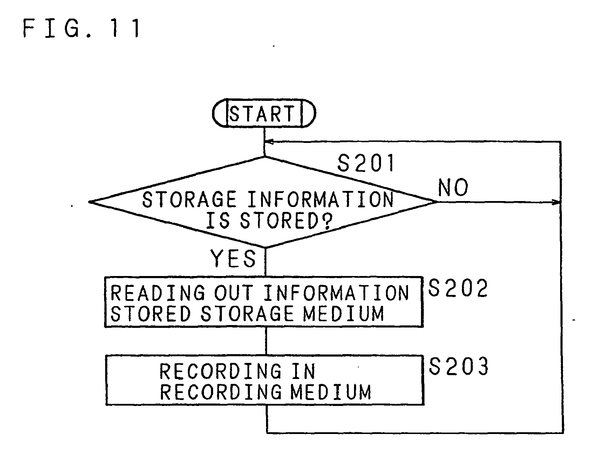

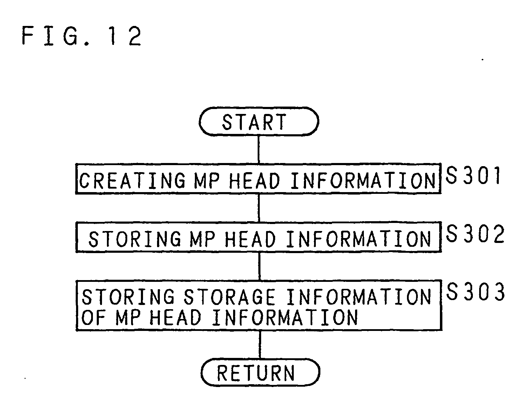

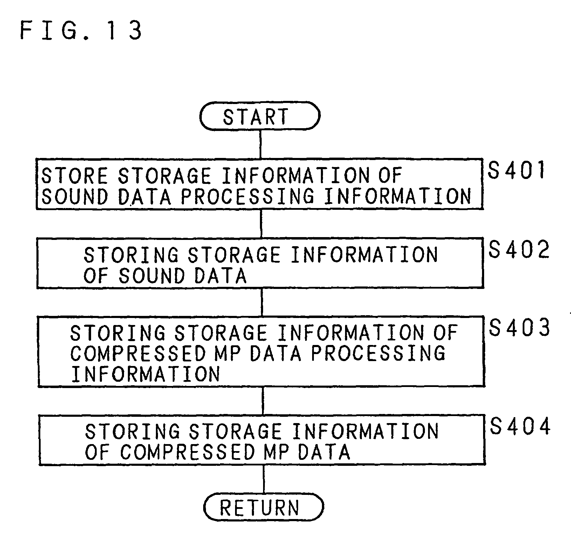

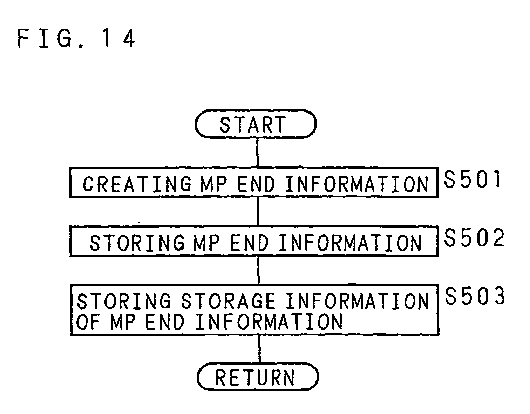

Next, a method for recording image according to the present invention will be described with reference to flowcharts of the digital camera shown in Figs. 9A and 9B, Figs. 10 through 14.

If the digital camera is set to the continuous mode, and the shutter button 4 is being depressed (S101), then the image recording method according to the present invention is performed.

A recording-to-recording-medium subroutine, in which the information stored in the storage medium 10 is read out and then recorded in the recording medium 11, is started (S102).

The recording-to-recording-medium subroutine started at step S102 judges if the storage information is stored in the instruction list in the storage medium 10 (S201). If the storage information is stored, the information stored in the storage medium 10 is read out based on the storage information (S202), and recording in the recording medium 11 is performed (S203), thereupon the information transferred to the recording medium 11 and the storage information relevant thereto are deleted from the storage medium 10.

The subroutine goes back to step S201 to see if there is new storage information in the instruction list.

It should be noted that the new storage information is not entered in the instruction list until the operation relevant to compressing MP data for the 15 frames of the first group is performed. For this reason, step S201 through S203 are carried out only after the operations for the first group is completed. Specifically, the recording operation of image data stored in the storage medium 10 to the recording medium 11 is performed only after the amount of image data of the storage medium 10 reaches a certain predetermined amount.

It should be noted further that prior to the first recording operation from the storage medium 10 to the recording medium 11, a pre-processing is performed for writing the compressed MP data in the recording medium.

At each point of tA0, tB0, ..., when the synchronizing signal changes from "High" to "Low" (S103), the image pickup operation is started (S104), the sound sampling operation is started (S105), and the image data converting operation is performed for converting the image taken by the objective lens to the bitmap data (S106).

At each point of tA1, tB1, ..., when the synchronizing signal changes from "Low" to "High" (S107), the recording-to-recording-medium subroutine is suspended (S108), the addresses necessary for storing data in the storage medium 10 are selected, image data is compressed (S109), and then the obtained compressed MP data is stored at the given addresses (S110).

The number of frames taken and compressed for the present group is counted (S111). If the number of frames compressed into the compressed MP data for the group is smaller than 15 (S112), the step S102 is repeated to start the recording-to-recording-medium subroutine. The cycle of steps from S102 through S112 is repeated until the number of frames prepared as the compressed MP data reaches 15. If the number reaches 15, the image pickup operation for this particular group is judged to have been completed, and operations after the step 112, to be described later, are performed.

Through the above steps, the amount of data stored in the storage medium 10 reaches the predetermined level. Then, in parallel to the processing operations performed for the next group, which is the cycle starting at tB0 (the point when the synchronizing signal changes from "High" to "Low") covering the operations from image pickup to storing in the storage medium 10, the operation of reading out the information (image data for the previous group) from the storage medium 10 and recording in the recording medium 11 is performed. However, as has been mentioned earlier, this process of recording to the recording medium 11 is suspended while the other operations uses the storage medium 10 during the time period starting at each of tA1, tB1, ...

Judgment is made if the MP head information has been created (S113). If the MP head information is not created yet, operations relevant to the MP head information are performed (S114).

The operations relevant to the MP head information include creating the MP head information (S301), storing the MP head information at the predetermined location of the storage medium 10 (S302), and storing the storage information of the MP head information in the instruction list (S303).

If judgment is made in step S113 that the MP head information is created already, then the operations relevant to the MP head information defined in steps S301 through 303 are not performed.

Next, sound data is created from the sound sampled during the image pickup operation for this particular group (S115), and stored at the predetermined location of the storage medium 10 (S116).

Further, processing information of the compressed MP data for the 15 frames and processing information of the sound data is created (S117), and stored at the predetermined locations of the storage medium 10 (S118).

Then, operations to store the above storage information in the instruction list is performed (S119).

The operations to store the storage information in the instruction list are the following operations; storing the storage information of the sound data processing information stored in the storage medium 10 (S401), storing the storage information of the sound data (S402), storing the storage information of the compressed MP data processing information for 15 frames (S403), and storing the storage information of the compressed MP data for the 15 frames (S404).

This completes the processing cycle for one group. The cycle goes back to step S101. Then if the shutter button 4 is still being depressed, the cycle is started for the next group.

If the shutter button 4 is not being depressed in step S101, judgment is made that the image pickup operation is finished, and operations relevant to the MP end information are performed (S120).

The operations relevant to the MP end information include creating the MP end information (S501), storing the MP end information at the predetermined location of the storage medium 10 (S502), and storing the storage information of the MP end information in the instruction list (S503).

Next, the recording-to-recording-medium subroutine is started (S121) to perform the operations defined in steps S201 through S203: Information stored in the storage medium 10 is read out according to the instruction list and recorded in the recording medium 11, so that information which is not completed to transfer to the recording medium 11 yet is recorded in the recording medium 11.

After the above operation of retrieving information from the storage medium 10 according to the instruction list and recording the information in the recording medium 11 is completed (S122), a post-processing operation is performed to sign off the storage medium (S124). During this process, information already recorded in the recording medium is overwritten if necessary.

With completion of the post-processing operation, the image recording operation comes to an end.

As described above, according to the present invention, the process from image pickup through recording in the recording medium are performed in synchronization with the synchronizing signal, whereas the process in which information stored in the storage medium is recorded in the recording medium is performed asynchronous with the synchronizing signal. In this way these processes are carried out in parallel to each other.

According to the present embodiment, the number of frames is used as a standard for defining the group as the unit of processing. However, this does not limit the present invention. For example, the length of time for which image pickup operation is performed may be used as the standard.

Further, a different form may be used for compressing the MP data, such as MPEG (Moving Picture Experts Group) instead of the Motion JPEG format.

Further, the method for recording image according to the present invention is also applicable to a housing in which a MP taken by a digital camera is transferred to a recording medium such as a hard disc in which only an average bit rate is warranted but there is no warranty to the bit rate for each bit data.

As has been described above, in the method for recording image and the image pickup apparatus according to the present invention, not only the image data obtained by the image pickup operation is recorded in the recording medium, but also a storing region is secured as the instruction list for recording the storage information which includes the addresses and the length of the image data. This instruction list serves specifically for providing the storage information. As a result, transferring of the image data from the storing media to the recording media can be made quickly.

The amount of image data stored in the storage medium is monitored for the certain predetermined level.

After the predetermined level is achieved, the recording operation, in which the image data stored in the storage medium is read out and recorded to the recording medium, is performed in parallel with the cycle of operation from image pickup to storing image data in the storage medium.

Reading out and recording the data based on the instruction list and in parallel with the cycle of operations from image pickup to storing in the storage medium as described above brings a number of advantages. For example, required time from image pickup to reproduce is shortened, and waiting time till the recording medium is ready to be removed is shortened also.

## Claims

1. A method for recording image, comprising the steps of:
storing image data obtained by an image pickup operation in a storage medium (10);
recording the image data stored in the storage medium (10) into a non-volatile recording medium (11); and
measuring the amount of the image data stored in the storage medium (10) until reaching a predetermined amount of data,
**characterized in that**
after reaching the predetermined amount of data stored in the storage medium, the step of recording the image data in the recording medium (11) is carried out in parallel in the time with the step of storing in the storage medium (10) image data obtained by the image pickup operation.

2. The method for recording image according to Claim 1, further comprising the steps of:
storing in the storage medium (10) storage information including a start address and data length of the image data being stored in the storage medium (10); and
recording the image data being stored in the storage medium (10) to the recording medium (11) based on the storage information.

3. The method for recording image according to Claim 1 or Claim 2, wherein the step of storing image data in the storage medium (10) includes the steps of:
converting an image signal obtained by the image pickup operation to the image data by the frame of image, and
compressing the image data before storing in the storage medium (10).

4. The method for recording image according to Claim 3, wherein the image data are compressed according to a motion picture compression form.

5. An image pickup apparatus comprising:
an optical lens (2);
an image pickup device (8) for taking image through the optical lens (2);
storage instructing means (9) for storing image data obtained by an image pickup operation of the image pickup device (8) in a storage medium (10);
record instructing means (9) for allowing to record the image data from the storage medium (10) to a non-volatile recording medium (11); and
measuring means (9) for measuring the amount of the image data stored in the storage medium (10);
**characterized by** including:
parallel processing instructing means (9), for instructing the record instructing means (9) to record into a non-volatile recording medium (11) the image data being stored in the storage medium (10) in parallel in the time with the storing operation of image data obtained by the image pickup operation after reaching the predetermined amount of data stored in the storage medium.

6. The image pickup apparatus according to Claim 5, wherein the storage instructing means (9) stores in the storage medium (10) storage information including a start address and data length of the image data stored in the storage medium (10); and
the record instructing means (9) allows to record the image data stored in the storage medium (10) into the recording medium (11) based on the storage information.

7. The image pickup apparatus according to Claim 5 or Claim 6, further comprising:
A/D conversion means (9) for converting an image signal obtained by the image pickup device (8) from analog image signals to digital image signals;
image data conversion means (9) for converting the converted digital image signals to image data; and
compressing means (9) for compressing the converted image data,
wherein the compressed image data are stored in the storage medium (10).

8. The image pickup apparatus according to Claim 7, wherein the compressing means (9) compresses the image data according to a motion picture compression form.

## Patentansprüche

1. Verfahren zur Bildaufzeichnung mit den Schritten:
Speichern von Bilddaten, die durch einen Bildaufnahmevorgang erhalten worden sind, in einem Speichermedium (10);
Aufzeichnen der in dem Speichermedium (10) gespeicherten Daten in einem nichtflüchtigen Aufzeichnungsmedium (11); und
Messen der Menge der Bilddaten, die in dem Speichermedium (10) gespeichert sind, bis zum Erreichen einer vorbestimmten Datenmenge,
**dadurch gekennzeichnet, dass**
nach dem Erreichen der vorbestimmten Datenmenge, die in dem Speichermedium gespeichert ist, der Schritt Aufzeichnen der Bilddaten in dem Aufzeichnungsmedium (11) zeitlich parallel zu dem Schritt Speichern der Bilddaten, die durch den Bildaufnahmevorgang erhalten worden sind, in dem Speichermedium (10), durch geführt wird.

2. Verfahren zur Bildaufzeichnung nach Anspruch 1, weiterhin mit den Schritten:
Speichern von Speicherinformation in dem Speichermedium (10), welche die Startadresse und Datenlänge der Bilddaten, die in dem Speichermedium (10) gespeichert sind, enthält; und
Aufzeichnen der in dem Speichermedium (10) gespeicherten Bilddaten in dem Aufzeichnungsmedium (11) basierend auf der Speicherinformation.

3. Verfahren zur Bildaufzeichnung nach Anspruch 1 oder 2, wobei der Schritt Speichern der Bilddaten in dem Speichermedium (10) die Schritte aufweist:
Umwandeln eines Bildsignals, das durch den Bildaufnahmevorgang erhalten worden ist, in Bilddaten durch den Bildrahmen, und
Komprimieren der Bilddaten vor dem Speichern in dem Speichermedium (10).

4. Verfahren zur Bildaufzeichnung nach Anspruch 3, wobei die Bilddaten gemäß einer Filmbildkompressionsform komprimiert werden.

5. Bildaufnahmegerät mit:
einer optischen Linse (2);
einer Bildaufnahmevorrichtung (8) zum Aufnehmen des Bildes durch die optische Linse (2);
Speicherinstruktionsmitteln (9) zum Speichern der durch einen Bildaufnahmevorgang der Bildaufnahmevorrichtung (8) erhaltenen Bilddaten in einem Speichermedium (10);
Aufzeichnungsinstruktionsmitteln (9), um zu ermöglichen, die Bilddaten von dem Speichermedium (10) in einem nichtflüchtigen Aufzeichnungsmedium (11) aufzuzeichnen; und
Messmittel (9) zum Messen der Menge der Bilddaten, die in dem Speichermedium (10) gespeichert sind;
**gekennzeichnet durch**:
Parallelverarbeitungsinstruktionsmittel (9) zum Instruieren der Aufzeichnungsinstruktionsmittel (9), in einem nichtflüchtigen Aufzeichnungsmedium (11) die Bilddaten aufzuzeichnen, die in dem Speichermedium (10) gespeichert sind, zeitlich parallel zu dem Speichervorgang der Bilddaten, die **durch** den Bildaufnahmevorgang erhalten worden sind, nachdem die vorbestimmte Menge Daten, die in dem Speichermedium gespeichert sind, erreicht ist.

6. Bildaufnahmegerät nach Anspruch 5, wobei die Speicherinstruktionsmittel (9) in dem Speichermedium (10) Speicherinformation speichern, die eine Startadresse und eine Datenlänge der Bilddaten, die in dem Speichermedium (10) gespeichert sind, umfasst; und
die Aufzeichnungsinstruktionsmittel (9) das Aufzeichnen der Bilddaten, die in dem Speichermedium (10) gespeichert sind, in dem Aufzeichnungsmedium (11) basierend auf der Speicherinformation freigeben.

7. Bildaufnahmegerät nach Anspruch 5 oder 6, weiterhin mit:
A/D-Konversionsmittel (9) zum Umwandeln eines Bildsignals, das von der Bildaufnahmevorrichtung (8) erhalten worden ist, von analogen Bildsignalen in digitale Bildsignale;
Bilddatenkonversionsmittel (9) zum Umwandeln der umgewandelten digitalen Bildsignale in Bilddaten; und
Kompressionsmittel (9) zum Komprimieren der umgewandelten Bilddaten,
wobei die komprimierten Bilddaten, in dem Speichermedium (10) gespeichert werden.
8. Bildaufnahmegerät nach Anspruch 7, wobei die Kompressionsmittel (9) die Bilddaten gemäß einer bewegt Filmbildkompressionsform komprimieren.

## Revendications

1. Procédé d'enregistrement d'image, comprenant les étapes consistant à :
- stocker des données d'enregistrement obtenues par une opération de collecte d'images dans un support de stockage (10) ;
- enregistrer les données d'image, stockées dans le support de stockage (10), dans un support d'enregistrement non-volatile (11) ; et
- mesurer la quantité de données d'images stockées dans le support de stockage (10) jusqu'à atteindre une quantité prédéterminée de données,
**caractérisé en ce que**,
après avoir atteint la quantité prédéterminée de données stockées dans le support de stockage, l'étape d'enregistrement des données d'image dans le support d'enregistrement (11) est mise en oeuvre parallèlement en même temps que l'étape de stockage dans le support de stockage (10), des données d'images obtenues par l'opération de collecte d'images.

2. Procédé d'enregistrement d'image selon la revendication 1, comprenant en outre les étapes consistant à :
- stocker dans un support de stockage (10) des informations de stockage comportant une adresse de départ et une longueur de données des données d'images étant stockées dans le support de stockage (10) ; et
- enregistrer les données d'image, étant stockées dans le support de stockage (10), dans le support d'enregistrement (11) sur la base des informations de stockage.

3. Procédé d'enregistrement d'image selon la revendication 1 ou 2, dans lequel l'étape de stockage de données d'images dans le support de stockage (10) comporte les étapes consistant à :
- convertir un signal d'image, obtenu par l'opération de collecte d'images, en les données d'images par la trame d'image, et
- compresser les données d'images avant le stockage dans le support de stockage (10).

4. Procédé d'enregistrement d'image selon la revendication 3, dans lequel les données d'images sont compressées selon un format de compression de film.

5. Appareil de capture d'image comprenant :
une lentille optique (2) ;
un dispositif de capture d'images (8) pour prendre une image au travers de la lentille optique (2) ;
des moyens donneurs d'instructions de stockage (9) pour stocker des données d'image obtenues par une opération de collecte d'images du dispositif de collecte d'image (8) dans un support de stockage (10) ;
des moyens donneurs d'instructions d'enregistrement (9) pour permettre d'enregistrer les données d'image du support de stockage vers un support d'enregistrement non-volatile (11) ; et
des moyens de mesure (9) pour mesurer la quantité des données d'images stockées dans le support de stockage (10);
**caractérisé en ce qu'**il comprend :
des moyens donneurs d'instructions de traitement parallèle (9) pour donner des instructions aux moyens donneurs d'instruction d'enregistrement (9) pour enregistrer dans le support d'enregistrement non-volatile (11) les données d'image stockées dans le support de stockage (10) en parallèle, en même temps, que l'opération de stockage des données d'images obtenues par l'opération de collecte d'images après avoir atteint la quantité prédéterminée de données stockées dans le support de stockage.

6. Appareil de capture d'image selon la revendication 5, dans lequel les moyens donneurs d'instructions de stockage (9) stockent dans le support de stockage (10) des informations de stockage comportant une adresse de départ et une longueur de données des données d'images stockées dans le support de stockage (10) ; et
les moyens donneurs d'instructions d'enregistrement (9) permettent d'enregistrer les données d'image, stockées dans support de stockage, dans le support d'enregistrement (11) sur la base des informations de stockage.

7. Appareil de capture d'image selon la revendication 5 ou 6, comprenant en outre :
des moyens de conversion analogique/numérique (9) pour convertir un signal d'image obtenu par le dispositif de capture d'image (8), de signaux d'image analogiques en signaux d'image numériques ;
des moyens de conversion de données d'image (9) pour convertir les signaux d'image numérique convertis en données d'image ; et
des moyens de compression (9) pour compresser des données d'images converties,
dans lequel les données d'images compressées sont stockées dans le support de stockage (10).

8. Appareil de capture d'image selon la revendication 7, dans lequel les moyens de compression (9) compressent les données d'image selon un format de compression de film.
